# EUROPEAN PATENT SPECIFICATION

(11) **EP 3 900 579 B1**
(45) Date of publication and mention of the grant of the patent: **12.10.2022**
(21) Application number: 20171505.9
(22) Date of filing: 27.04.2020
(51) Int. Cl.: H05B 3/26, H05B 3/34, A47C 7/74, B60N 2/56

(54) **HEATED SEAT FOR VEHICLES, MEANS OF TRANSPORT AND AGRICULTURAL OR CONSTRUCTION MACHINERY**
BEHEIZTER SITZ FÜR FAHRZEUGE, TRANSPORTMITTEL UND LANDWIRTSCHAFTLICHE ODER BAUMASCHINEN
SIÈGE CHAUFFÉ POUR VÉHICULES, MOYENS DE TRANSPORT ET MACHINES AGRICOLES OU DE CONSTRUCTION

(30) Priority: 22.04.2020 CZ 202037466 U
(43) Date of publication of application: 27.10.2021
(73) Proprietor: Technicka univerzita v Liberci, 460 01 Liberec (CZ)
(72) Inventor: Lepsik, Petr, 463 12 Liberec (CZ); Martonka, Rudolf, 460 01 Liberec (CZ); Fliegel, Vitezslav, 460 15 Liberec (CZ)
(74) Representative: Musil, Dobroslav

(56) References cited:
- EP-A1- 2 008 865
- EP-A1- 2 514 633
- JP-A- 2009 269 480
- JP-A- 2015 039 896

## Description

### Technical field

The invention relates to a heated seat for vehicles, means of transport and agricultural or building machinery formed by a seat bottom and a backrest, which are delimited at the sides of the seat by the side surface of the seat and a support surface of the seat is formed on them from the front side, serving as a support for the seated person, the seat support surface is divided into a central zone and an edge zone, whereby a manually switched heating element is arranged in the central zone and the edge zone is situated between the central zone and the side surface of the seat.

### Background art

In the construction of seats for vehicles and means of transport, including building and agricultural machinery, seat heating is increasingly used equipment which increases the comfort of the driver or passenger. The heating systems used are based on heating the contact surface of the seat which supports the human body, using electric heating elements. Most of the seats heated in this manner are usually equipped with heating in the form of a single heating element, a resistance wire, a resistance plate or a resistance spiral, in sophisticated cases with several heating elements which allow advantageous installation in the seat structure, as in the patent CS 172474 (Jäger et al., "Electrically heated seat for means of transport"), or allow the use of independent zone heating, usually separately for the seat bottom and separately for the backrest. More sophisticated approaches seek to further increase passenger comfort by using more complex temperature control and heated surfaces, as described by A. Havelka et al. in the Czech utility model 23763, "Heated car seat".

Czech utility model No. CZ23763U discloses a car seat consisting of a seat bottom and a backrest which uses a set of independent heating segments, each of which is equipped with a pressure and temperature sensor which regulates the heat output of the heating segment depending on the mechanical load of the heating segment.

European patent application EP 2008865A1 discloses a heated seat for vehicles with a plurality of seat heating segments divisionally arranged at the heated seat. Each of segments is configured such that, when heating, a temperature of a center portion becomes higher than a temperature of a peripheral portion thereof. The heating segments are selectively operated by a control circuit and operation panel to warm-up parts of a body of a seated person with different intensity, based on detected symptoms and preferences of the seated person. The control circuit is configured to discriminate a state, or a symptom of the seated person based on a signal from various sensors, e. g. a pressure sensitive sensor configured such as to measure a pressure pressed by a part of the body of the seated person to estimate a seated posture and related symptom, from the body weight distribution. Manually operated operation panel, for the detection of preferences of the seated person, is arranged in an instrument panel in the vehicle and is configured such as to output operation signal to the control circuit.

Japan patent application JP 2015039896A discloses a seat heater device for vehicles with a plurality of heating segments to selectively heat different areas of the seat. A person seated in the seat operates a control panel to select individual heating segments to locally heat desired areas of the seat. The control panel comprises plurality of manual switches, including selection switches for a selection of heated area, and operation switches for changing size, vertical dimension, and horizontal dimension of the heated target area. In one embodiment, the device further includes a pressure sensitive sensor to detect a contact area of a body of the seated person with the seat and to control the heating according to a change of a posture of the seated person.

The heating segments comprising pressure and temperature sensors are expensive, their price being increased especially by the price of the sensors used. The heating segments operated manually by control panel demands an installation of expensive panel, e. g. touch screen, which, especially when installed into public transport vehicles, brings reasonable costs. In case of passenger cars, the control panel is occupying space of a dashboard and is demanding continual participation of a passenger or a driver which could negatively impact to traffic safety. The way how to achieve a market acceptable price of a heated seat is to use heating segments of larger dimensions. However, the disadvantage of using large heating segments is that, after the person has settled into the seat, the heating segments heat up a larger space than would be necessary with respect to the dimensions of the sitting person.

The object of the invention is to provide a fully personalized and partially autonomous heating of seats, especially seats of means of transport, which will be more energy efficient.

### Principle of the invention

The object of the invention is achieved by an electrically heated seat comprising the features of claim 1. The advantage of such a technical solution of an electrically heated seat is, in contrast to the solutions known today, that it reflects the size, height and width of the figure of the person sitting on the seat. While in the central zone is located a heating element which is operated only by manual control and which heats the seat surface corresponding to the size of a slim sitting person, the autonomous heating elements surrounding the heating element located in the central zone of the seat are switched successively from center to edge by pressure switches, depending on how big a figure settles into the seat. These individual edge autonomous heating elements are therefore switched only at the points where the pressure switches are loaded by the seated figure, while the autonomous heating elements whose pressure switches are not loaded do not heat and thus energy is saved.

As stated above, the autonomous heating elements surround the central heating element at least from three sides. In one embodiment of the invention, the manually switched central heating element of the seat backrest, heating under the back of the seated person at the lumbar spine, is surrounded by the autonomous heating elements from three sides substantially perpendicular to each other, while the central heating element of the seat bottom is surrounded by the autonomous heating elements only from two sides, so that the manually operated central heating element heats under the entire length of the contact area of the legs of the seated figure with the seat bottom. Nevertheless, in another embodiment of the invention of the heated seat may be advantageous if the rows of autonomous heating elements surround the heating element of the central zone from all four sides, such that also the central heating element of the seat bottom is surrounded by the autonomous heating elements from three sides substantially perpendicular to each other. The advantage of this embodiment is the interchangeability of components of the autonomous heating elements of the seat bottom and the backrest and the resulting reduction in the number of production and storage items and the savings in production costs.

The autonomous heating elements of the edge zone of the backrest and the seat bottom of the seat comprise a pressure sensor, each of them being individually connected to a power source. This preferred embodiment of the heated seat is independent of the shape and size of the autonomous heating elements and applies to small autonomous heating plates, coils or foils, each of these small autonomous heating elements being equipped with a separate pressure switch and individually connected to the power supply, as well as larger or composite heating elements, each of which being also equipped with a pressure switch and individually connected to a source of electrical current.

In analogous embodiments of the heated seat which comprise rows of autonomous heating elements, further savings in the number of components required, in particular of pressure switches, can be achieved by connecting the autonomous heating elements in individual rows surrounding the central zone heating element, whereby each row is provided with one pressure sensor and is individually connected to a power source. Loading one pressure switch by the sitting person results in switching the whole row of connected autonomous heating elements, which is designed to correspond to the usual shape of the surface with which a seated person's body touches the seat at its edge.

Another preferred embodiment of the aforementioned invention which comprises autonomous heating elements surrounding the heating element of the central zone is a heated seat in which each row of autonomous heating elements or each connected row of autonomous heating elements is formed by one resistance wire. The use of one autonomous resistance wire instead of a row of other autonomous heating elements, heating plates, printed heating plates, heating foil or other suitable heating elements having a substantially centrally symmetrical flat shape is advantageous for some simple seat designs, retains the advantage of reducing the number of components controlled by pressure switches, thereby reducing the number of these switches and reducing production costs.

### Description of the drawings

The invention will be described with reference to exemplary embodiments which are schematically represented in the drawings, wherein Fig. 1 shows a view of a seat, Fig. 2a shows a basic embodiment of the seat with individualized autonomous heating system, Fig. 2b shows another variant of embodiment of a similar solution of Fig. 2a, but using the preferred shape of the autonomous heating elements, Fig. 3 is another alternative embodiment of the seat with an individualized autonomous heating system and Fig. 4 is an exemplary embodiment of a heating coil switched by the pressure action of a spring-loaded switch.

### Examples of embodiment

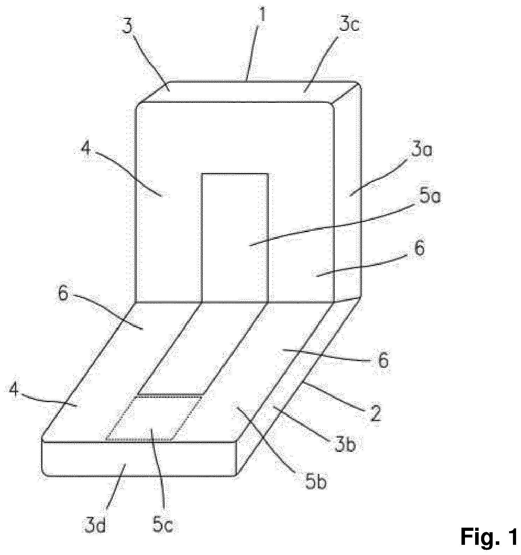

Fig. 1 shows a heated seat for means of transport. The seat according to Fig. 1 consists of a backrest **1** of the seat and a bottom seat **2.** The backrest **1** and the bottom seat **2** of the seat are spatially delimited at their sides by the side surface **3** of the seat, which can be distinguished more specifically into a side surface **3a** of the backrest, a side surface **3b** of the seat bottom, an upper side surface **3c** of the backrest and a front side surface **3d** of the seat bottom. Furthermore, the seat in the part of the backrest **1** and in the part of the seat bottom **2** is spatially delimited by a support surface **4** which serves as a support surface for a person sitting on the seat. The support surface **4** of the seat is divided into two zones, into the central zone **5** of the support surface **4** of the seat and into the edge zones **6** of the support surface **4** of the seat, which are arranged on both sides of the central zone **5.**

The central zone **5** of the support surface **4** of the seat consists of the central zone **5a** of the support surface of the seat backrest **1** and of the central zone **5b** of the support surface of the seat bottom **2** of the seat. The central zone **5a** and the central zone **5b** are adjacent. In this technical embodiment, both the central zone **5a,** and the central zone **5b** have the shape of a quadrilateral, in particular a rectangle, but it is clear that this shape can be replaced by a semicircle of approximately the same size or by a semi-oval shape or by another suitable shape.

The central zone **5b** of the support surface of the seat bottom may be adjacent (but not necessarily) to an extension **5c** (shown by a dashed line in Fig. 1) of the central zone **5b** of the seat bottom such that the central zone **5** of the seat support surface touches the front side surface **3d** of the seat bottom **2** with this extension **5c**.

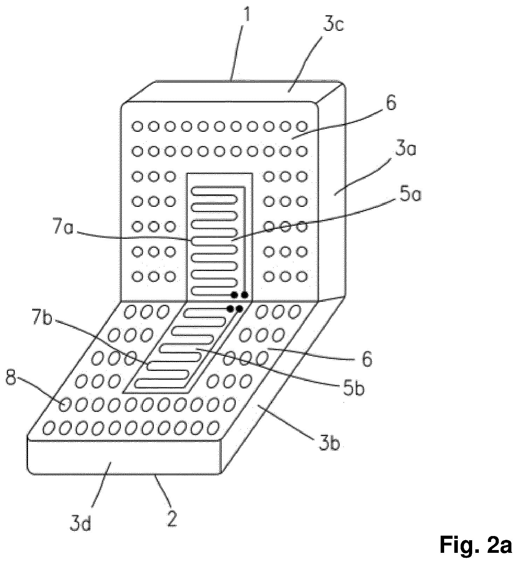

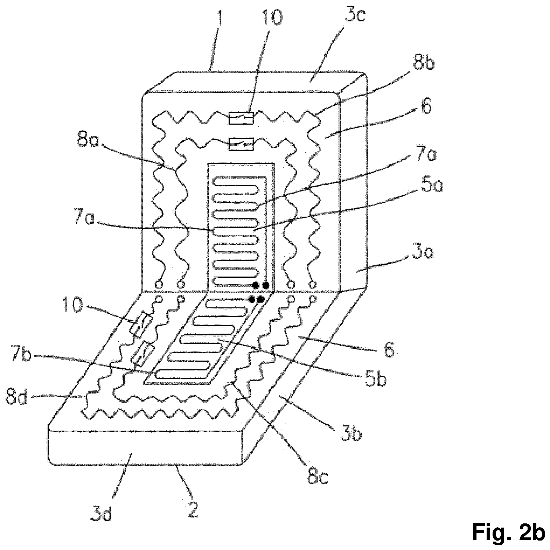

In a basic embodiment which does not comprise an extension **5c** (in the solution shown in Fig. 2a, b), the edge zone **6** of the support surface **4** of the seat is located along the entire circumference of the central zone **5** of the seat, between the central zone **5** of the seat and the side surface **3** of the seat. In an embodiment of the invention with the extension **5c** of the central zone **5** (Fig. 1), the central zone **5** is adjacent to the front side surface **3d** of the seat bottom **2** of the seat.

In a first exemplary embodiment of the invention, Fig. 2a shows a first variant of an exemplary embodiment using small autonomous heating elements (8) having a substantially centrally symmetrical flat shape, such as the shape of a circular plate. Fig. 2a shows a seat comprising a backrest **1** and a seat bottom **2.** The support surface **4** of the seat is divided into a central zone **5** and an edge zone **6.** The edge zone **6** is in this embodiment located along the entire circumference of the central zone **5,** that is, between the central zone **5** and the side surface **3** of the seat. The central zone **5** in this exemplary embodiment does not comprise the extension **5c** (Fig. 1) of the central zone **5b** of the support surface of the seat bottom **2** of the seat.

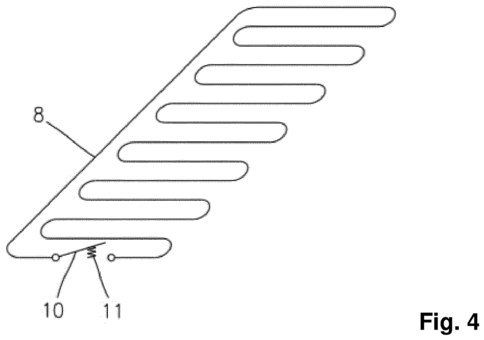

In the central zone **5** of the seat is located a heating element **7,** which is formed in this exemplary embodiment by a heating resistance wire, but a different heating element can also be used, for example a printed heating plate, heating foil or heating fabric. Located in the edge zone **6** of the support surface **4** of the seat is a set of autonomous heating elements **8** which have in this exemplary embodiment a circular shape and are connected in parallel to an unillustrated power source. The autonomous heating elements **8,** approximately U - shaped, or having the shape of concentric semicircles, are arranged in several rows around the central zone **5.** In the embodiment shown in Fig. 2a, a plurality of autonomous circular heating elements **8** are used, whereby the number of these heating elements **8** may vary with respect to the size of the seat used. Each of these autonomous heating elements **8** is equipped with an independent pressure switch. The pressure sensor is a part of the autonomous heating element **8** and is not shown in Fig. 2a. It is obvious to a person skilled in the art that several different types of pressure switches can be used, in the exemplary embodiment it is a mechanical pressure switch 10 with a spring **11** shown in Fig. 4 that is used.

Fig. 2b schematically represents a second variant of the first exemplary embodiment of the invention in which the rows of autonomous heating elements **8** are replaced by one autonomous heating element **8** of elongated shape, for example by a heating resistance wire. As with the first variant described above, the autonomous heating elements **8** preferably have a U-shape or the shape of a semicircle arranged around the central zone **5.** The first, inner autonomous heating element **8a** of the backrest **1** of the seat is in the edge zone **6** located such that it surrounds the heating element **7** of the central zone **5** from three sides which are perpendicular to each other. The second, outer autonomous heating element **8b** of the backrest **1** of the seat is larger than the first autonomous heating element **8** and is disposed such that from three sides perpendicular to each other it surrounds the first autonomous heating element **8a.** The first, inner autonomous heating element **8c** of the seat bottom **2** of the seat in the edge zone **6** is located such that surrounds the heating element **7** of the central zone **5** from three sides perpendicular to each other. The second, outer autonomous heating element **8d** of the seat bottom **2** of the seat is larger than the first autonomous heating element **8** and is disposed such that it surrounds the first autonomous heating element **8c** from three sides perpendicular to each other. Each of the autonomous heating elements **8a, 8b, 8c, 8d** is switched by an independent pressure switch **10.**

The heating element **7** located in the central zone **5** is in both variants of the first exemplary embodiment described above manually switched and serves to heat the seat in the central zone **5,** which is designed to correspond to the height and width of a slender seated figure. The autonomous heating elements **8** disposed in the edge zone **6** serve to heat the support surface **4** of the seat which corresponds to the area of the contact of the support surface **4** with the body of a medium or heavy figure. If a person who touches with his or her body the edge zone **6** of the support surface of the seat **4** sits in the seat while the heating of the seat by the heating element **7** is switched on, the respective pressure switches **10** are pressed by gravity acting on the body of this person, the respective autonomous heating elements **8** are switched on and the edge zone **6** of the support surface **4** of the seat is heated.

If necessary, the first heating element **7** may be supplemented by other unillustrated heating elements located in the central zone **5** of the support surface **4** of the seat, or it may be divided into an independent heating element **7a** of the central zone **5a** of the support surface of the backrest **1** of the seat and an independent heating element **7b** of the central zone **5b** of the support surface of the seat bottom **2** of the seat. The heating element **7** is manually switched in the exemplary embodiment, however, if necessary, for example in construction machines, where it is assumed that the driver often moves away from the seat without switching off the machine, the heating element **7** can also be supplemented by a pressure switch (not shown) located in the central zone **5b** of the support surface of the seat bottom **2** of the seat.

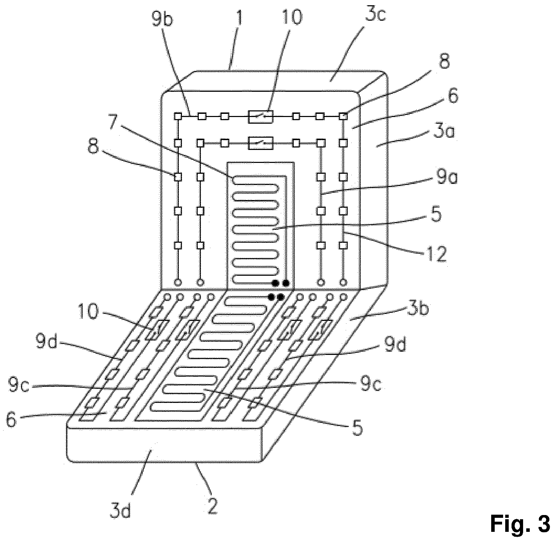

In a second embodiment of the invention, Fig. 3 shows a seat consisting of a backrest **1** and of a seat bottom **2** and the support surface **4** of the seat is divided into a central zone **5** and an edge zone **6.** The central zone **5** of the seat bottom **2** in this exemplary embodiment comprises the extension **5c** of the central zone **5b** of the support surface of the seat bottom **2** of the seat. The edge zone **6** of the seat bottom **2** is in this embodiment arranged along the circumference of the central zone **5** and is located between the central zone **5** and the side surfaces **3a, 3b, 3c.**

A heating element **7** is arranged in the central zone **5** of the seat. A plurality of autonomous heating elements **8** are arranged in the edge zone **6** of the support surface **4** of the seat. In each case several autonomous heating elements **8** are connected in a row **9** switched by a pressure switch **10.** In the embodiment shown in Fig. 3, there are four rows **9** of autonomous heating elements **8,** each of these rows being switched by one pressure switch **10.** In the exemplary embodiment, a pressure switch **10** with a spring **11** shown in Fig. 4 is used.

Each of the rows **9** of connected autonomous heating elements **8** consists of several autonomous heating elements **8** of the edge zone **6,** which are connected in series with a conductor **12.** The autonomous heating elements **8** are in this case printed square-shaped heating plates, but apparently, the construction of the rows **9** of autonomous heating elements described in this exemplary embodiment is suitable also for other types of heating elements which have a shape of a flat plate. Two rows **9** of connected autonomous heating elements **8** are disposed in the edge zone **6** of the support surface **4** of the seat backrest **1** and another four rows **9** of autonomous heating elements **8** are disposed in the edge zone **6** of the support surface **4** of the seat bottom **2** of the seat, whereby the number of the rows **9** of these heating elements **8** may vary with respect to the size of the seat used.

The rows **9** of connected autonomous heating elements **8** disposed in the seat backrest **1** are arranged such that the first row **9a** of autonomous heating elements **8** has an inverted **U**-shape and surrounds the central zone **5a** from three sides. The second row **9b** of connected autonomous heating elements **8** is larger than the first row **9a** and comprises more autonomous heating elements **8** than the row **9a**. This row **9b** also has an inverted **U**-shape and is disposed in the seat backrest **1** between the first row **9a** of autonomous heating elements **8** and the side surface **3** of the seat backrest **1**. Depending on the size of the seat, it is possible to locate other unillustrated rows of autonomous heating elements in a similar manner between the row **9b** and the side surface **3** of the seat.

The rows **9c** and **9d** of connected autonomous heating elements **8** located in the bottom seat **2** of the seat in the case of the second exemplary embodiment (Fig. 3) are arranged such that along each side of the central zone **5b** with the extension **5c** of the central zone is located one inner row **9c** of autonomous heating elements **8** and one outer row **9d** of autonomous heating elements **8** in the edge zone **6** of the support surface of the seat bottom. According to the size of the seat, it is possible to locate other unillustrated rows of autonomous heating elements in a similar manner along each side of the central zone **5b** with the extension **5c.**

The heating element **7** located in the central zone **5** is in this second exemplary embodiment shown in Fig. 3 manually switched and serves to heat the seat in the central zone **5,** which is designed such that it corresponds to the height and width of a slender figure. The autonomous heating elements **8** disposed in the edge zone **6** serve to heat the support surface **4** of the seat which corresponds to the area of the contact of the support surface **4** with the body of a medium or heavy figure. If a person who touches with his or her body the edge zone **6** of the support surface of the seat **4** sits in the seat while the heating of the seat by the heating wire **7** is switched on, the respective pressure switches **10** are pressed by gravity acting on the body of this person, the respective rows **9** of autonomous heating elements **8** are switched on and the edge zone **6** of the support surface **4** of the seat is heated.

Also in the case of the second embodiment, described above, the first heating element **7** may be supplemented by other unillustrated heating elements located in the central zone **5** of the support surface **4** of the seat, optionally it may be divided into an independent heating element of the central zone **5a** of the support surface of the seat backrest **1** and an independent heating element of the central zone **5b** of the support surface of the seat bottom **2** of the seat. This heating element **7** is in the exemplary embodiment manually switched, however, if necessary, for example in some building machines, where it is assumed that the driver often moves away from the seat without switching off the machine, the heating element **7** can be supplemented by a pressure switch **10** located in the central zone **5b** of the support surface of the seat bottom **2** of the seat.

### List of references

- 1: seat backrest
- 2: bottom seat of the seat
- 3: side surface of the seat
- 3a: lateral side surface of the backrest
- 3b: lateral side surface of the seat bottom
- 3c: upper side surface of the backrest
- 3d: front side surface of the seat bottom
- 4: support surface of the seat
- 5: central zone of the seat support surface
- 5a: central zone of the support surface of the seat backrest
- 5b: central zone of the support surface of the seat bottom of the seat
- 5c: extension of the central zone of the support surface of the seat bottom of the seat
- 6: edge zone of the seat support surface
- 7: heating element of the central zone
- 7a: heating element of the central zone of the support surface of the backrest
- 7b: heating element of the central zone of the support surface of the seat bottom
- 8: autonomous heating element of the edge zone
- 8a: inner autonomous heating element of the edge zone of the support surface of the backrest
- 8b: outer autonomous heating element of the edge zone of the support surface of the backrest
- 8c: inner autonomous heating element of the edge zone of the support surface of the seat bottom
- 8d: outer autonomous heating element of the edge zone of the support surface of the seat bottom
- 9: row of connected heating elements of the edge zone
- 9a: inner row of connected heating elements of the edge zone of the support surface of the backrest
- 9b: outer row of connected heating elements of the edge zone of the support surface of the backrest
- 9c: inner row of connected heating elements of the edge zone of the support surface of the seat bottom
- 9d: outer row of connected heating elements of the edge zone of the support surface of the seat bottom
- 10: pressure switch
- 11: spring of the pressure switch
- 12: conductor of heating element connection of the edge zone

## Claims

1. A heated seat for vehicles, means of transport and agricultural or building machinery consisting of a seat bottom (2) and a backrest (1), which are on the sides of the seat delimited by a side surface (3) of the seat, and a support surface (4) is formed on the front side (4) of the seat serving as a support for a seated person, the support surface (4) of the seat is divided into a central zone (5) and an edge zone (6), whereby a manually switched heating element (7) is arranged in the central zone and the edge zone (6) is situated between the central zone (5) and the side surface (3) of the seat, **characterized in that** in the edge zone (6) of the support surface (4) of the seat are located autonomous heating elements (8) provided with an independent pressure switch (10), whereby the autonomous heating elements (8) are arranged in rows surrounding the heating element (7) of the central zone (5) of the support surface (4) of the seat from at least three sides, whereby they are arranged in a U-shape or in concentric circles.

2. The heated seat according to claim 1, **characterized in that the** autonomous heating elements (8) comprise a pressure switch and each of them is individually connected to a power source.

3. The heated seat according to claim 1, **characterized in that** the autonomous heating elements (8) in the individual rows (9) are connected and each row (9) is provided with one pressure sensor (10) and individually connected to a power source.

4. The heated seat according to claim 1 or 2, **characterized in that** the autonomous heating elements (8) are formed in each row by one resistance wire provided with one pressure sensor (10) and individually connected to a source of electric current.

## Patentansprüche

1. Beheizter Sitz für Fahrzeuge, Transportmittel und Landwirtschafts- oder Baumaschinen, der durch ein Sitzkissen (2) und einer Rückenlehne (1) gebildet wird, die auf den Seiten des Sitzes durch eine Seitenfläche (3) des Sitzes abgegrenzt sind, und von der Stirnseite her ist auf ihnen eine Stützfläche (4) des Sitzes gebildet, die als eine Stützung der sitzenden Person dient, die Stützfläche (4) des Sitzes ist in einen Mittenbereich (5) und einen Randbereich (6) gegliedert, wobei in dem Mittenbereich ein manuell zu schaltendes Heizelement (7) angeordnet ist und der Randbereich (6) zwischen dem Mittenbereich (5) und der Seitenfläche (3) des Sitzes situiert ist, **dadurch gekennzeichnet, dass** im Randbereich (6) der Stützfläche (4) des Sitzes autonome Heizelemente (8) angebracht sind, die einen selbständigen Druckschalter (10) aufweisen, wobei die autonomen Heizelemente (8) in Reihen angeordnet sind, die das Heizelement (7) des Mittenbereiches (5) der Stützfläche (4) des Sitzes mindestens von drei Seiten her umgeben, wobei sie in eine U-Form oder in konzentrische Kreise angeordnet sind.

2. Beheizter Sitz nach dem Anspruch 1, **dadurch gekennzeichnet, dass** autonome Heizelemente (8) einen Druckschalter aufweisen und jeder von ihnen an eine elektrische Stromquelle individuell angeschlossen ist.

3. Beheizter Sitz nach dem Anspruch 1, **dadurch gekennzeichnet, dass** autonome Heizelemente (8) in einzelnen Reihen (9) verbunden sind und jede Reihe (9) einen Druckschalter (10) aufweist und an eine elektrische Stromquelle selbständig angeschlossen ist.

4. Beheizter Sitz nach dem Anspruch 1 oder 2, **dadurch gekennzeichnet, dass** autonome Heizelemente (8) in jeder Reihe durch einen Widerstandsdraht gebildet werden, der einen Druckschalter (10) aufweist und der an eine elektrische Stromquelle selbständig angeschlossen ist.

## Revendications

1. Siège chauffé pour véhicules, moyens de transport et machines agricoles ou de construction, comprenant un siège (2) et un dossier (1) qui sont délimités sur les côtés du siège par une surface latérale (3) du siège, avec une surface de support (4) du siège formée sur le côté avant du siège qui sert de support pour la personne assise ; la surface de support (4) du siège est divisée en deux zones, zone centrale (5) et zone marginale (6), avec un élément chauffant (7) doté d'un interrupteur manuel disposé dans la zone centrale, tandis que la zone marginale (6) est située entre la zone centrale (5) et la surface latérale (3) du siège, **caractérisé en ce que** des éléments chauffants autonomes (8) munis d'un pressostat autonome (10) sont disposés dans la zone marginale (6) de la surface de support (4) du siège, tandis que les éléments chauffants autonomes (8) sont disposés en rangées autour de l'élément chauffant (7) de la zone centrale (5) de la surface de support (4) du siège sur au moins trois côtés, formant ainsi une « lettre U » ou des cercles concentriques.

2. Siège chauffé selon la revendication 1, **caractérisé en ce que** les éléments chauffant autonomes (8) comprennent un pressostat et chacun d'eux est relié individuellement à une source de courant électrique.

3. Siège chauffé selon la revendication 1, **caractérisé en ce que** les éléments chauffant autonomes (8) dans les rangées (9) sont connectés et chacune des rangées (9) est munie d'un pressostat (10) et connectée individuellement à une source de courant électrique.

4. Siège chauffé selon la revendication 1 ou 2, **caractérisé en ce que** les éléments chauffants autonomes (8) de chaque rangée sont formés par un fil résistif équipé d'un pressostat (10) et relié séparément à la source de courant électrique.
